Europäisches Patentamt

(19) European Patent Office

Office européen des brevets

(11) EP 0 735 984 B1

(12) **FASCICULE DE BREVET EUROPEEN**

(45) Date de publication et mention
de la délivrance du brevet:
**11.03.1998 Bulletin 1998/11**

(21) Numéro de dépôt: **95904568.3**

(22) Date de dépôt: **20.12.1994**

(51) Int. Cl.$^6$: **C01G 25/02**, C01F 17/00

(86) Numéro de dépôt international:
**PCT/FR94/01489**

(87) Numéro de publication internationale:
**WO 95/18068 (06.07.1995 Gazette 1995/29)**

(54) **PRECURSEUR D'UNE COMPOSITION ET COMPOSITION A BASE D'UN OXYDE MIXTE DE CERIUM ET DE ZIRCONIUM, PROCEDE DE PREPARATION ET UTILISATION**

VORLÄUFERZUSAMMENSETZUNG UND AUF CERIUM- UND ZIRKONIUMMISCHOXIDE BASIERTE ZUSAMMENSETZUNG, DEREN HERSTELLUNGSVERFAHREN UND ANWENDUNG

COMPOSITION PRECURSOR AND CERIUM AND ZIRCONIUM MIXED OXIDE BASED COMPOSITION, METHOD FOR ITS PREPARATION AND USE THEREOF

(84) Etats contractants désignés:
**AT BE DE ES FR GB IT SE**

(30) Priorité: **24.12.1993 FR 9315605**

(43) Date de publication de la demande:
**09.10.1996 Bulletin 1996/41**

(73) Titulaire: **RHONE-POULENC CHIMIE**
**92408 Courbevoie Cédex (FR)**

(72) Inventeurs:
• **BONNEAU, Lionel**
  **F-17540 Angliers (FR)**
• **CHOPIN, Thierry**
  **F-95320 Saint-Leu-la-Forêt (FR)**
• **TOURET, Olivier**
  **F-17000 La Rochelle (FR)**
• **VILMIN, Gabriel**
  **Princeton, NJ 08540 (US)**

(74) Mandataire:
**Dubruc, Philippe et al**
**RHONE-POULENC CHIMIE,**
**Direction de la Propriété Industrielle,**
**25, Quai Paul Doumer**
**92408 Courbevoie Cédex (FR)**

(56) Documents cités:
**DE-A- 3 408 096**        **FR-A- 2 590 887**
**US-A- 4 497 785**

• **DATABASE WPI Week 9128, Derwent
  Publications Ltd., London, GB; AN 91-205196 &
  JP,A,3 131 343 (NISSAN MOTOR KK) 4 Juin 1991**
• **DATABASE WPI Week 9215, Derwent
  Publications Ltd., London, GB; AN 92-118001 &
  JP,A,4 055 315 (DAINICHISEIKA COLOR CHEM.
  ET AL) 24 Février 1992**

Remarques:
Le dossier contient des informations techniques présentées postérieurement au dépôt de la demande et ne figurant pas dans le présent fascicule.

## Description

La présente invention concerne, à titre de produits industriels nouveaux et utiles, des précurseurs de compositions et des compositions à base d'oxydes mixtes de cérium et de zirconium présentant notamment des surfaces spécifiques améliorées, en particulier des surfaces spécifiques élevées et stables thermiquement.

Elle concerne également un procédé pour l'obtention de tels précurseurs et de telles compositions, ainsi que l'utilisation de ces dernières, notamment dans le domaine de la catalyse, en tant que catalyseurs mêmes et/ou supports de catalyseurs.

L'oxyde de cérium et l'oxyde de zirconium apparaissent aujourd'hui comme deux constituants particulièrement importants et intéressants; ainsi, à titre d'exemple, ils sont tous deux de plus en plus fréquemment rencontrés, seuls ou conjointement, dans de nombreuses compositions pour catalyseurs dits multifonctionnels, notamment les catalyseurs destinés au traitement des gaz d'échappement des moteurs à combustion interne. Par multifonctionnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). On notera que de tels catalyseurs, tant au niveau de leurs compositions que de leur principe de fonctionnement, ont déjà été largement décrits dans la littérature et ont fait l'objet de nombreux brevets et/ou demandes de brevets.

Même si les raisons scientifiques qui ont été avancées à ce jour pour tenter d'expliquer ce fait apparaissent encore quelque peu incertaines, voire parfois contradictoires, il semble pourtant maintenant bien établi que les catalyseurs industriels "trois voies" qui contiennent à la fois de l'oxyde de cérium et de l'oxyde de zirconium sont globalement plus efficaces que les catalyseurs qui sont soit totalement exempts des deux oxydes précités, soit exempts de seulement l'un d'entre eux.

Dans des catalyseurs tels que ci-dessus, l'oxyde de cérium et l'oxyde de zirconium, qui peuvent d'ailleurs exercer une fonction catalytique propre et/ou une fonction de simple support pour d'autres éléments catalytiques tels que platine, rhodium et autres métaux précieux, sont généralement présents sous une forme non combinée, c'est à dire que l'on retrouve ces deux constituants, au niveau du catalyseur final, sous la forme d'un simple mélange physique de particules d'oxydes bien individualisées. Ceci résulte en partie du fait que ces catalyseurs à base d'oxyde de cérium et d'oxyde zirconium sont le plus souvent obtenus par mélange intime des poudres d'oxydes correspondants, ou bien encore de précurseurs décomposables thermiquement en ces oxydes.

Or, pour diverses raisons, il se dégage aujourd'hui dans l'état de l'art une tendance de plus en plus marquée à essayer d'introduire et de mettre en oeuvre dans la composition du catalyseur les éléments cérium et zirconium non plus sous une forme séparée et non combinée, mais au contraire directement sous la forme d'un véritable oxyde mixte de type solution solide $CeO_2$-$ZrO_2$ .

Toutefois, dans pareille situation, et il s'agit à d'une exigence tout à fait classique dans le domaine de la catalyse, il devient alors nécessaire de pouvoir disposer d'un oxyde mixte présentant une surface spécifique qui soit la plus élevée possible et aussi, de préférence, stable thermiquement. En effet, compte tenu du fait que l'efficacité d'un catalyseur est généralement d'autant plus grande que la surface de contact entre le catalyseur (phase catalytiquement active) et les réactifs est élevée, il convient que le catalyseur, tant à l'état neuf qu'après un emploi prolongé à plus ou moins hautes températures, soit maintenu dans un état le plus divisé possible, c'est à dire que les particules solides, ou cristallites, qui le constituent restent aussi petites et aussi individualisées que possible, ce qui ne peut être obtenu qu'à partir d'oxydes mixtes présentant des surfaces spécifiques élevées et relativement stables en températures.

On notera à ce niveau de l'exposé que certains oxydes mixtes de type solution solide dans le système $CeO_2$-$ZrO_2$ ont déjà été décrits dans la littérature; toutefois leur préparation nécessite généralement une étape de calcination à relativement haute température pour obtenir une phase cubique unique, comme cela ressort par exemple de la publication de E. TANI, M. YOSHIMURA et S. SOMIYA intitulée "Revised Phase Diagram of the System $ZrO_2$-$CeO_2$ below 1400°C" et parue dans J. Am. Ceram. Soc., 1983, vol 66 [7], pp 506-510. Le diagramme de phase donné dans cette publication montre ainsi que pour obtenir une phase stable cristallisant dans le système cubique, il est nécessaire de procéder à des calcinations et/ou à des recuits à des températures au moins supérieures à 1000°C, ce qui est bien entendu tout à fait incompatible avec l'obtention d'un oxyde mixte de haute surface spécifique. A de telles températures de calcination, où se forme certes la solution solide désirée, la surface spécifique du produit obtenu n'excède en effet pas 10 $m^2$/g, et est même généralement inférieure à 5 $m^2$/g. En d'autres termes, les oxydes mixtes décrits dans l'art antérieur ne sont donc pas susceptibles de convenir pour des applications en catalyse.

La présente invention se propose de résoudre le problème ci-dessus.

Plus précisément encore, la présente invention vise à proposer des oxydes mixtes de type solution solide dans le système $CeO_2$-$ZrO_2$ qui présentent une grande surface spécifique.

Elle vise également à proposer des oxydes mixtes tels que ci-dessus qui conservent une surface spécifique importante même après des calcinations à des températures élevées.

Elle vise aussi l'obtention d'oxydes mixtes à volume poreux important.

Elle vise enfin à proposer un procédé industriel de synthèse permettant d'accéder de manière simple aux nouveaux oxydes mixtes selon l'invention.

Dans ce but, le procédé selon l'invention de préparation d'un précurseur d'une composition à base d'un oxyde mixte de cérium et de zirconium est caractérisé en ce qu'il comprend les étapes suivantes :

- on prépare un mélange liquide comprenant des composés du cérium trivalent et du zirconium;
- on met en contact le mélange précédent avec un carbonate ou bicarbonate et on forme un milieu réactionnel présentant pendant la réaction un pH neutre ou basique;
- on récupère le précipité obtenu, comprenant un composé de carbonate de cérium. On connait du document JP-A-4055315 un procédé similaire basé sur l'utilisation d'une solution de composés de Ce et Zr avec mise en contact avec un carbonate. Cependant, si l'on utilise $Ce^{+++}$, un oxydant est ajouté dans ce cas pour passer à l'état $Ce^{++++}$, ce qui exclut le passage par un carbonate intermédiaire et les avantages qui en découlant.

L'invention couvre en outre un procédé de préparation d'une composition à base d'un oxyde mixte de cérium et de zirconium qui est caractérisé en ce qu'il comprend les mêmes étapes que le procédé ci-dessus et, en outre, une étape finale de calcination.

Le procédé de l'invention permet de mettre en oeuvre des températures relativement basses tout en conduisant à des produits présentant des surfaces spécifiques suffisamment élevées pour convenir à des applications en catalyse.

L'invention concerne de plus des produits.

Tout d'abord, l'invention couvre un précurseur de composition à base d'un oxyde mixte de cérium et de zirconium qui est caractérisé en ce qu'il comprend un mélange d'un composé carbonate de cérium et d'un oxyhydroxyde de zirconium et, éventuellement des sels d'additifs.

Ensuite, l'invention concerne aussi selon un premier mode de réalisation une composition à base d'un oxyde mixte de cérium et de zirconium, caractérisée en ce qu'elle présente un volume poreux total d'au moins 0,6cm$^3$/g.

L'invention concerne encore selon un second mode de réalisation une composition à base d'un oxyde mixte de cérium et de zirconium, caractérisée en ce qu'elle présente un volume poreux total d'au moins 0,3 g/cm$^3$, ce volume étant essentiellement apporté par des pores de diamètre d'au plus 0,5$\mu$m.

L'invention concerne en outre l'utilisation d'une telle composition pour la fabrication de catalyseurs ou de supports de catalyseurs.

L'invention concerne enfin un catalyseur comprenant une structure formant support revêtue par une couche poreuse sur laquelle sont déposés des éléments catalytiquement actifs et qui est caractérisé en ce que ladite couche poreuse comprend une composition du type décrit ci-dessus.

D'autres caractéristiques, détails et avantages de l'invention apparaîtront encore plus complètement à la lecture de la description qui va suivre, ainsi que des dessins annexés pour lesquels :

- la figure 1 est un porogramme de produits de l'invention et de l'art antérieur;
- la figure 2 est un porogramme de produits de l'invention et de l'art antérieur;
- la figure 3 est un spectre de diffraction X d'un produit selon l'invention;
- la figure 4 est un spectre de diffraction X d'un produit selon l'art antérieur.

Dans l'exposé qui suit de la présente invention, on entend par surface spécifique, la surface spécifique B.E.T déterminée par adsorption d'azote conformément à la norme ASTM D 3663-78 établie à partir de la méthode BRUNAUER - EMMETT - TELLER décrite dans le périodique "The Journal of the American Society, 60, 309 (1938)".

Il est en outre précisé que l'invention concerne des produits dans lesquels le cérium et le zirconium sont les constituants essentiels. Toutefois, l'invention couvre aussi les produits dans lesquels sont présents à titre d'additifs, notamment à titre d'additifs stabilisant, au moins un élément choisi dans le groupe comprenant les terres rares, l'aluminium, le silicium, le thorium, le magnésium, le scandium, le gallium, le fer, le bismuth, le nickel, l'étain, le chrome et le bore. Par terre rare on entend ici les éléments du groupe constitué par l'yttrium et les éléments de la classification périodique de numéro atomique compris inclusivement entre 57 et 71. La classification périodique des éléments à laquelle il est fait référence est celle publiée dans le Supplément au Bulletin de la Société Chimique de France n° 1 (janvier 1966). En conséquence, chaque fois que l'expression oxyde mixte à base de cérium et de zirconium est utilisée, elle doit être entendue comme visant également une composition pouvant en outre contenir les additifs décrits ci-dessus, ces additifs étant présents essentiellement en solution solide dans l'oxyde de cérium. De même, dans la description du procédé, tout ce qui est mentionné au sujet du cérium et du zirconium s'applique, sauf indication contraire, aux additifs.

La première étape du procédé de l'invention consiste à préparer un mélange liquide comprenant des composés du cérium et du zirconium et, éventuellement d'un additif.

Ce mélange est généralement un mélange aqueux comprenant des sels solubles du cérium et du zirconium et, éventuellement d'un additif.

En ce qui concerne le cérium, on utilise de préférence des sels de cérium trivalents. On peut citer plus particulièrement les halogénures et notamment le chlorure ainsi que le nitrate.

A titre de composés solubles du zirconium utilisables dans le procédé de l'invention, on peut par exemple citer les sels du type sulfate de zirconium, nitrate de zirconyle ou bien encore chlorure de zirconyle. On notera que le nitrate de zirconyle convient particulièrement bien.

Au lieu de partir d'un mélange aqueux comprenant des sels solubles, il est tout à fait possible d'utiliser une suspension aqueuse comprenant les composés du cérium et du zirconium, ceux-ci pouvant par exemple dans ce cas se trouver sous la forme d'hydroxydes pouvant être préparés notamment par précipitation à l'ammoniaque en conditions basiques à partir d'un mélange de nitrates, cette réaction de précipitation pouvant aussi se faire en présence d'un agent oxydant tel que par exemple l'oxygène ou l'eau oxygénée. Enfin, on peut aussi partir d'un mélange comprenant des composés sous forme de sels solubles et des composés sous forme de suspension.

Enfin, lorsque l'on désire obtenir une composition finale contenant également un additif en solution solide, on peut mettre en oeuvre cet additif sous forme de sels miscibles avec les autres composés et notamment sous forme de sels solubles de cet additif tels que nitrates par exemple; on peut encore utiliser des sols dans certains cas.

Le mélange peut être indifféremment obtenu soit à partir de composés initialement à l'état solide que l'on introduira par la suite dans un pied de cuve du liquide de mélange par exemple l'eau, soit encore directement à partir de solutions ou suspensions de ces composés puis mélange, dans un ordre quelconque, desdites solutions ou suspensions.

Les quantités de cérium, de zirconium présentes dans le mélange doivent correspondre aux proportions stoechiométriques requises pour l'obtention de la composition finale désirée.

Il peut être avantageux, avant de passer à l'étape suivante du procédé, de chauffer le mélange obtenu pour obtenir une solution parfaitement à l'équilibre. Généralement, ce chauffage se fait à une température comprise entre 25 et 100°C.

L'étape suivante du procédé consiste à mettre en contact le mélange décrit précédemment avec un carbonate ou bicarbonate. On forme ainsi lors de cette mise en contact un milieu réactionnel comprenant les composés du cérium, du zirconium avec le carbonate ou le bicarbonate.

Selon une caractéristique importante de l'invention, cette mise en contact se fait dans des conditions telles que durant la réaction le pH du milieu réactionnel reste neutre ou basique.

La valeur requise de pH est obtenue si nécessaire par utilisation d'une base et plus particulièrement d'une solution basique.

On peut utiliser comme base les produits du type hydroxyde, carbonate ou hydroxy-carbonate par exemple. On peut citer les hydroxydes d'alcalins ou d'alcalinoterreux, les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée.

En ce qui concerne le carbonate ce terme doit s'entendre comme pouvant comprendre aussi un hydroxycarbonate. On citera à titre d'exemple le carbonate ou le bicarbonate d'ammonium.

La valeur du pH du milieu réactionnel est généralement d'au moins 7 et est comprise entre 7 et 7,5 dans le cas d'un milieu neutre et plus particulièrement d'au moins 8 dans le cas d'un milieu basique. Plus précisément, cette valeur peut être comprise entre 7,5 et 14, notamment entre 8 et 11 et plus particulièrement entre 8 et 9.

La réaction de précipitation se fait généralement à la température ambiante. On peut toutefois travailler à une température un peu plus élevée, par exemple jusqu'à 50°C.

Selon un mode de réalisation particulier de l'invention qui permet d'obtenir la condition de pH mentionnée plus haut, on réalise la mise en contact précitée en introduisant le mélange liquide dans la solution basique. On peut donc par exemple former un pied de cuve avec la solution basique dans lequel on introduit le mélange liquide.

Il est aussi possible de procéder en continu. Dans ce cas, on introduit dans un réacteur simultanément le mélange, la base et le carbonate ou le bicarbonate en assurant un excès de base pour remplir la condition de pH.

On récupère à l'issue de cette réaction un précipité solide qui peut être séparé du milieu réactionnel par toute technique classique de séparation solide-liquide telle que par exemple filtration, décantation, essorage ou centrifugation .

Le produit tel que récupéré peut ensuite être soumis à des lavages, qui sont alors opérés de préférence à l'eau. Pour éliminer l'eau résiduelle, le produit lavé peut enfin, éventuellement, être séché par tout moyen connu, par exemple à l'air, et ceci à une température qui peut varier entre 80 et 300°C, de préférence entre 100 et 150°C.

On obtient ainsi un précurseur de composition à base d'un oxyde mixte de cérium et de zirconium, ce précurseur comprenant un mélange d'un composé carbonate de cérium et d'un oxyhydroxyde de zirconium et, éventuellement des sels d'additifs.

Par composé carbonate de cérium, on entend ici un carbonate ou encore un hydroxycarbonate de cérium.

Les précurseurs obtenus selon un mode de réalisation de l'invention ne mettant pas en oeuvre d'hydroxyde alcalin ou alcalinoterreux se caractérisent aussi par le fait qu'ils sont dépourvus d'ions alcalins ou alcalino terreux, leur teneur en oxydes alcalins ou alcalino terreux étant d'au plus 100ppm. Enfin, selon un mode de réalisation particulier de l'invention, le cérium et le zirconium sont présents en des quantités telles que le rapport atomique Zr/Ce est d'au plus 1,5 et plus particulièrement d'au plus 0,4.

Le produit issu de la réaction de précipitation peut être broyé éventuellement.

Pour obtenir ensuite les compositions selon l'invention, on effectue une étape complémentaire de calcination. Cette calcination permet de développer la cristallinité de la phase formée et de conduire à l'oxyde mixte, et la température à laquelle elle s'effectue peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte n'est bien évidemment pas exclue. Généralement, la calcination se fait à une température d'au moins 200°C et plus particulièrement d'au moins 350°C. Dans la pratique, on limite généralement la température de calcination à un intervalle de valeurs comprises entre 200 et 1000°C, de préférence comprises entre 350 et 800°C.

Une caractéristique intéressante des compositions selon l'invention est leur volume poreux élevé et/ou leur répartition de pores qui leur confère des propriétés intéressantes dans les applications en catalyse. Le volume poreux total des compositions selon un premier mode de réalisation est d'au moins 0,6cm$^3$/g. Il peut être plus particulièrement d'au moins 0,7cm$^3$/g. Il est habituellement compris entre 0,6 et 1,5cm$^3$/g. Par ailleurs, au moins 40%, plus particulièrement au moins 50%, du volume poreux total est apporté par des pores de diamètre d'au plus 1$\mu$m et notamment par des pores de diamètre compris entre 10 et 100nm.

Selon un second mode de réalisation, le volume poreux total des compositions est d'au moins 0,3 cm$^3$/g. Le volume poreux est apporté essentiellement par des pores dont le diamètre est d'au plus 0,5$\mu$m. On entend par là qu'au moins 90% de la totalité de ce volume est apporté par les pores de ce type. Le volume poreux peut être plus particulièrement compris entre 0,3 et 0,6 cm$^3$/g.

Ces caractéristiques reliant les diamètre des pores au volume poreux restent sensiblement constantes quelle que soit la température mis en oeuvre lors de la calcination et ceci tout particulièrement pour une température de calcination comprise entre 200 et 800°C.

Les caractéristiques de porosité décrites ci-dessus sont déterminées par porosimétrie par intrusion de mercure. Les mesures ont été faites sur un appareil Micromeretics Auto Pore 9220 sur des poudres mises à dégazer pendant une nuit dans une étuve chauffée à 200°C. Les paramètres opératoires sont les suivants :

Constante pénétromètre : 21,63
Volume capillaire : 1,1
Angle de contact : 140°
Poids de l'échantillon : 600mg (calciné à 400°C), 800mg (calciné à 600°C), 900mg (calciné à 800°C).

La préparation d'une composition selon le premier ou le second mode de réalisation peut se faire en fonction des conditions de séchage et de broyage ou de mise en forme du produit issu de la précipitation.

Un séchage en étuve sans broyage ou désagglomération conduira généralement à une composition selon le second mode. Si ce séchage est suivi d'un broyage du type micronisation, on obtient alors un produit selon le premier mode. Par broyage du type micronisation, on entend tout broyage conduisant à un produit micrométrique (de 1 à 100$\mu$m).

Un séchage par atomisation peut conduire directement à une composition selon le premier mode.

D'une manière plus générale, quel que soit le type de séchage utilisé, tout mode de mise en forme, notamment broyage, conduisant à un produit micrométrique, permet d'obtenir une composition selon le premier mode de réalisation.

Lorsque l'on soumet les précurseurs de l'invention à des températures de calcination relativement élevées, du même ordre que celles auxquelles sont soumis les catalyseurs au cours de leur utilisation, notamment dans des pots d'échappement, on obtient encore des compositions qui continuent à présenter une surface spécifique tout à fait convenable; ainsi, après une calcination de 6 heures à 800°C, les compositions selon l'invention présentent une surface spécifique qui est d'au moins 20 m$^2$/g, de préférence d'au moins 30 m$^2$/g, encore plus préférentiellement d'au moins 40 m$^2$/g et par exemple comprise entre 30 et 55m$^2$/g, et lorsque ces compositions sont issues d'une calcination de 6 heures à 900°C, lesdites surfaces sont conservées à des valeurs d'au moins 10m$^2$/g, de préférence d'au moins 20 m$^2$/g et par exemple comprises entre 10 et 40m$^2$/g.

En d'autres termes, les compositions selon l'invention présentent, au niveau de leurs surfaces spécifiques, une très bonne stabilité thermique.

La présence des éléments cérium et zirconium (et éventuellement d'un additif) au sein des compositions selon l'invention peut être mise en évidence par de simples analyses chimiques, alors que les analyses classiques en diffraction X indiquent la forme sous laquelle cette présence existe.

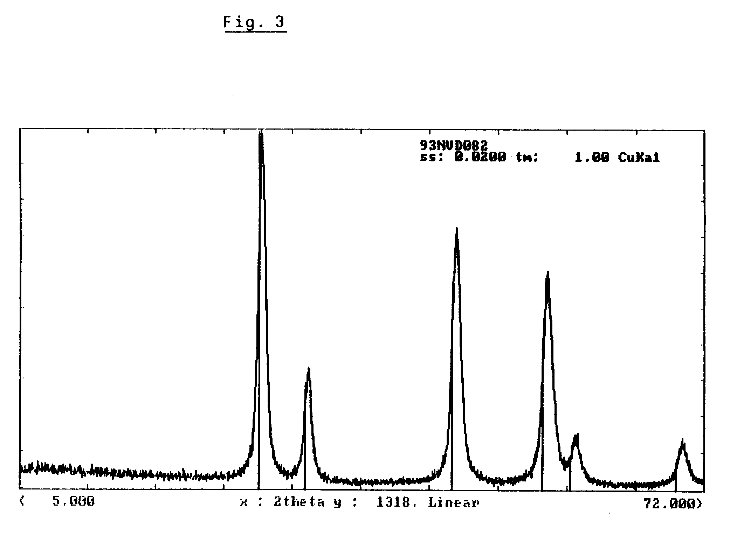

Ainsi, comme indiqué précédemment et comme cela apparait dans la figure 3, les éléments susmentionnés sont présents dans les compositions selon l'invention sous une forme combinée de type essentiellement, et de préférence totalement, solutions solides ou oxydes mixtes. Les spectres en diffraction X de ces compositions révèlent en effet, au sein de ces dernières, l'existence au moins une phase identifiable qui correspond en fait à celle d'un oxyde cérique $CeO_2$ cristallisé dans le système cubique et dont le paramètre de maille est plus ou moins décalé par rapport à un oxyde cérique pur, traduisant ainsi l'incorporation du zirconium (éventuellement d'un additif) dans le réseau cristallin de l'oxyde de cérium, et donc l'obtention d'une solution solide vraie.

Selon un mode de réalisation particulier de l'invention, les oxydes mixtes selon l'invention répondent globalement à la formule générale $Ce_x Zr_{1-x} O_2$ dans laquelle x peut être compris entre 0,4 et 1, plus particulièrement compris entre 0,7 et 1 et de préférence entre 0,8 et 1 , la valeur de 1 étant exclue.

On voit donc que les solutions solides à hautes surfaces spécifiques conformes à l'invention peuvent varier dans une gamme très large de composition. La teneur limite supérieure en zirconium dans la composition n'est en fait imposée que par la seule limite de solubilité de cette espèce dans l'oxyde de cérium.

Dans tous les cas, et même en particulier aux concentrations importantes en zirconium (notamment supérieures à 10% atomique), les compositions selon l'invention, outre le fait d'avoir des surfaces spécifiques très élevées et stables, continuent à se présenter sous une forme du type CeO2 cubique.

Les surfaces spécifiques élevées des nouvelles compositions selon l'invention font que ces dernières peuvent trouver de très nombreuses applications. Elles sont ainsi particulièrement bien adaptées pour être utilisées dans le domaine de la catalyse, comme catalyseurs et/ou comme supports de catalyseurs. Elles peuvent être employées comme catalyseurs ou supports de catalyseurs pour effectuer diverses réactions telles que, par exemple, la déshydratation, l'hydrosulfuration, l'hydrodénitrification, la désulfuration, l'hydrodésulfuration, la déshydrohalogénation, le réformage, le réformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion.

Toutefois, une des applications les plus importantes des compositions selon l'invention réside bien entendu, comme déjà souligné ci-avant dans la description, dans l'utilisation de ces dernières comme constituants pour catalyseurs destinés au traitement des gaz d'échappement des moteurs à combustion interne. Ainsi, dans cette application, la composition selon l'invention est mélangée avec un produit susceptible de former un couche poreuse pouvant venir, le cas échéant, en revêtement d'un substrat ou support ou pouvant encore constituer lui-même un support après mise en forme. Ce produit peut être de l'alumine, du titane ou de la zircone. Le mélange entre la composition et le produit précité peut se faire par exemple dans un broyeur humide. Le mélange se fait avant ou après imprégnation par des éléments catalytiquement actifs, tels que des métaux précieux. Ce mélange est ensuite mis en forme pour former des catalyseurs, par exemple sous forme de billes, comprenant ainsi le produit précité formant support et incorporant les compositions de l'invention et les métaux catalytiques Le mélange peut être aussi utilisé pour former un revêtement d'un support tel qu'un monolithe réfractaire en céramique ou un substrat métallique, ce revêtement étant bien connu dans l'état de l'art sous le terme de "wash-coat".

Les exemples qui suivent illustrent l'invention sans toutefois la limiter.

Exemples 1 à 3

On part des matières premières suivantes.

- $Ce (NO_3)_3$ en solution à 2,92 M/l d = 1,739
- $ZrO (NO_3)_2$ en solution à 19,1% d = 1,412
- $NH_4OH$ en solution à 22% d = 0,92
- $NH_4HCO_3$ en solution à 97%

On utilise un mélangeur rapide composé de deux réservoirs de 300 $cm^3$ dont les solutions sont éjectées sous pression dans un tube en Y.

Un des réservoirs contient une solution de nitrates, l'autre une solution basique de précipitation. Ces réservoirs peuvent être chauffés.

On met en oeuvre des solutions de composition donnée ci-dessous (pour 300 $cm^3$) et préparées à partir des matières premières décrites plus haut.

Solutions de nitrate :

|  | Exemple 1 | Exemple 2 | Exemple 3 |
|---|---|---|---|
| Rapport Ce/Zr* | 87/13 | 82/18 | 76/24 |
| $Ce(NO_3)_3$ | 171,8 g | 160,8 g | 148,8 g |
| $ZrO(NO_3)_2$ | 37,2 g | 53,7 g | 71,6 g |
| $H_2O$ | 175 g | 170 g | 165 g |

\* Ce rapport est exprimé en poids d'oxyde $CeO_2/ZrO_2$

Solution basique :

| $NH_4OH$ | 66,8 g |
|---|---|
| $NH_4HCO_3$ | 68,3 g |
| $H_2O$ | 227 g |

Pour l'exemple 1, la solution de nitrate est placée dans un réservoir du mélangeur chauffé à 80°C. L'autre réservoir est rempli avec la solution basique. La température de ce second réacteur est la température ambiante.

La durée totale de la précipitation est de 7 secondes pour le passage des 600 $cm^3$ de solution dans le mélangeur.

Après homogénéisation, le précipité est filtré sur Büchner sur papier Whatman n° 4, puis lavé par 750 $cm^3$ d'$H_2O$ permutée. Le produit est ensuite séché en couche mince en étuve ventilée à 100°C pendant une nuit.

Après séchage, le produit est désaggloméré au mortier puis calciné sous air à 400, 800 ou 900°C pendant 6 heures.

Pour les exemples 2 et 3, le procédé de synthèse est identique, seule change la composition des solutions de nitrate.

Les caractéristiques des produits obtenus sont regroupées dans le tableau 1.

Exemples comparatifs 4 à 5

Ces exemples illustrent des préparations selon un procédé décrit dans une demande de brevet au nom de la Demanderesse FR 92 15376.

Dans les proportions stoechiométriques requises, on mélange une première solution de nitrate de zirconyle $ZrO(NO_3)_2$, $2H_2O$ avec une deuxième solution de nitrate cérique dont l'acidité libre initiale a été préalablement neutralisée par ajout d'ammoniaque jusqu'à l'obtention d'un taux de neutralisation r égal à 0,5. On définit le taux de neutralisation (r) de la solution initiale de cérium par l'équation suivante :

$$r = \frac{n3 - n2}{n1}$$

dans laquelle n1 représente le nombre total de moles de Ce IV présentes dans la solution après neutralisation; n2 représente le nombre de moles d'ions $OH^-$ effectivement nécessaires pour neutraliser l'acidité libre initiale apportée par la solution aqueuse de sel de cérium IV; et n3 représente le nombre total de moles d'ions $OH^-$ apportées par l'addition de la base.

Le mélange ainsi obtenu est ensuite placé dans un autoclave (autoclave PARR) pour y subir un traitement thermique à 160°C pendant 4 heures.

A l'issue de ce traitement, le précipité obtenu est récupéré par filtration, puis lavé par une solution d'ammoniaque 2 M, et enfin séché pendant une nuit dans une étuve à 80 °C.

On soumet enfin le produit à une étape de calcination sous air à 400°C pendant 6 heures.

Les caractéristiques du produit obtenu sont indiquées dans le tableau 1.

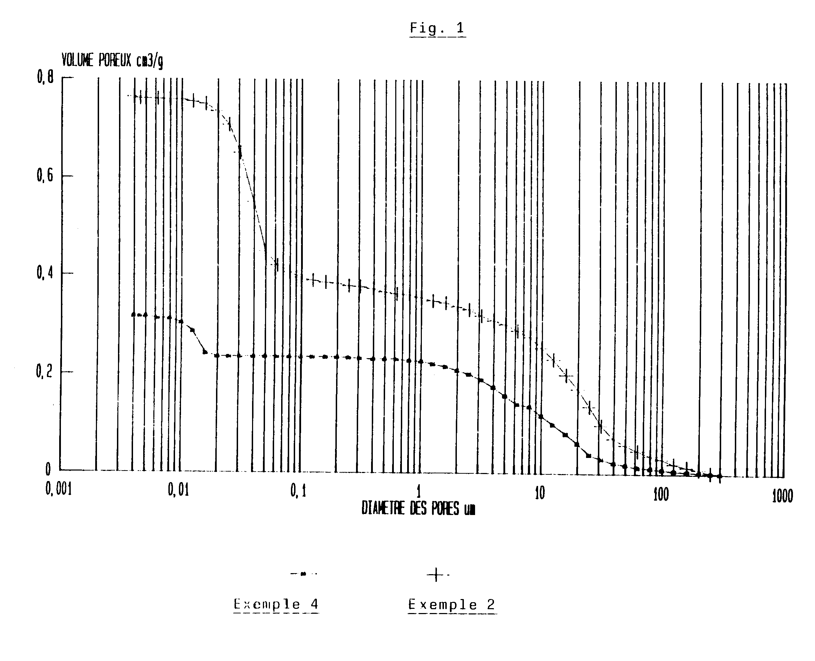

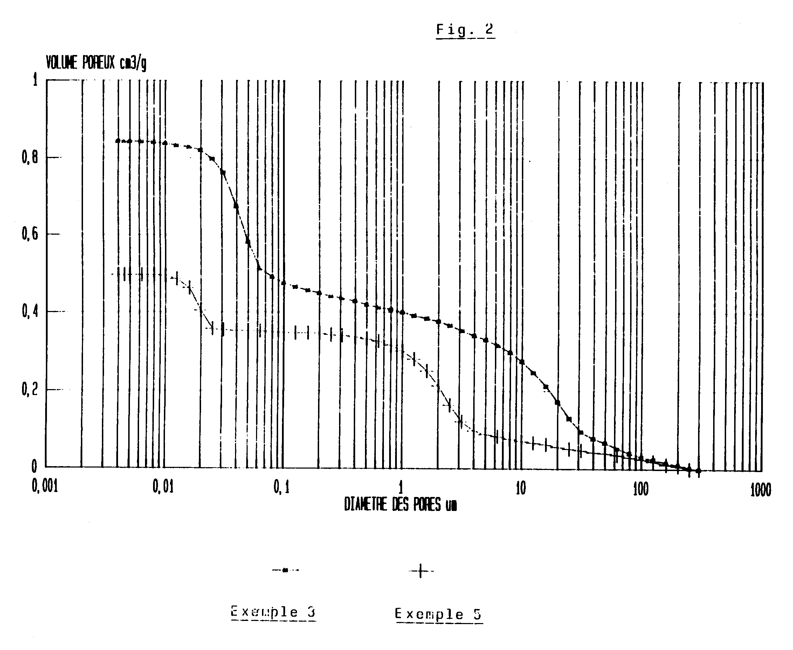

Les figures 1 et 2 sont des porogrammes qui concernent les produits de l'exemple 2 et de l'exemple comparatif 4 (Fig.1) après calcination 6 heures à 800°C et de l'exemple 3 et de l'exemple comparatif 5 (Fig.2) après calcination à la même température et pour la même durée.

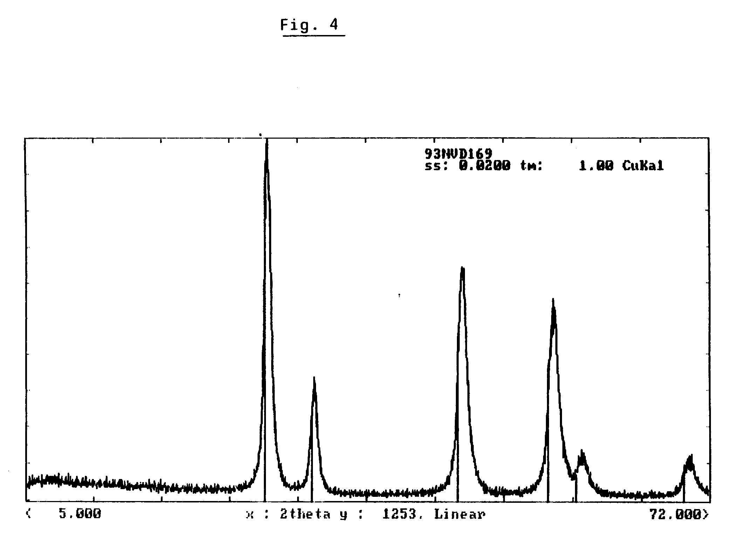

La figure 3 est un spectre de diffraction X du produit de l'exemple 2 après calcination à 800°C. La figure 4 est un spectre de diffraction X du produit de l'exemple comparatif 4 après calcination à la même température.

## Exemple 6

Cet exemple décrit une préparation de compositions selon l'invention par un procédé discontinu.
On part des deux solutions suivantes.

- <u>Solution 1</u> :     116,7 g de nitrate de Ce III (29,5% $CeO_2$)
        24,7 g de nitrate de zirconyle (19,9% $ZrO_2$)
        124 g $H_2O$
- <u>Solution 2</u> :     47,4 g de bicarbonate d'ammonium
        35,2 g $NH_4OH$ (29% en $NH_3$)
        240,4 g $H_2O$

La solution 1 est préchauffée à 80°C. Elle est ajoutée en 5 minutes à la solution 2 maintenue à l'origine à une température de 25°C. On filtre sur un Büchner de 15cm de diamètre et on lave avec 500ml d'eau. Le produit est ensuite séché à 125°C en étuve ventilée.
Il est enfin calciné à différentes températures.
Les caractéristiques du produit obtenus sont indiquées dans le tableau 1.

## Exemple 7

On procède de la même manière que dans l'exemple 6 mais sans préchauffage de la solution de nitrates et sans lavage du filtrat.
Les caractéristiques du produit obtenus sont indiquées dans le tableau 1.

## Exemple 8

Cet exemple illustre une préparation dans laquelle on part d'un hydroxyde mixte de cerium et de zirconium préparé par précipitation à l'ammoniaque en conditions basiques à partir d'un mélange de nitrates.
150 g d'un hydroxyde mixte de perte au feu de 80% sont ajoutés en 10 mn dans un réacteur contenant 500 ml de $NH_4HCO_3$ à 1,75 M/l. La température du réaction est régulée à 40°C. Le réacteur est fortement agité par une hélice multipale tournant à 400 Tr/mn.
Le produit est ensuite filtré sur Büchner. Le gâteau obtenu présente ue perte au feu de 75%. Il est ensuite séché en étuve à 100°C pendant une nuit.
Après séchage, le produit est désaggloméré et calciné comme dans l'exemple 1. Les caractéristiques du produit obtenus sont indiquées dans le tableau 1.

## Exemple 9

On procède comme dans l'exemple 8 mais en partant d'un hydroxyde mixte de cérium IV et de zirconium IV préparé par précipitation à l'ammoniaque en conditions basiques à partir d'un mélange de nitrates en présence d'eau oxygènée (en une quantité égale à deux fois la quantité stoechiométrique nécessaire pour oxyder le cérium) et de perte au feu de 85% et en utilisant une solution de $NH_4HCO_3$ à 0,75 M/l. Le produit obtenu présente un volume poreux total de 0,73$cm^3$/g. 40% de ce volume est apporté par des pores de diamètre d'au plus 1$\mu$m. Les autres caractéristiques figurent au tableau 2.

## Exemple 10

On procède comme dans l'exemple 1 mais on ne désagglomère pas le produit au mortier. Le produit obteneu présente un volume poreux total de 0,35$cm^3$/g. 90% de ce volume est apporté par des pores de diamètre d'au plus 0,5$\mu$m. Les autres caractéristiques figurent au tableau 2.

TABLEAU 1

| Exemples | Ex. 1 | Ex. 2 | Ex.3 | Ex.6 | Ex.7 | Ex. 8 | Comp. 4 | Comp. 5 |
|---|---|---|---|---|---|---|---|---|
| Rapport Ce/Zr* | 87/13 | 82/18 | 76/24 | 87/13 | 87/13 | 82/18 | 82/18 | 76/24 |
| SBET 6h. 400°C | 95 m$^2$/g | 77 m$^2$/g | 97 m$^2$/g | 92 m$^2$/g | | 100 m$^2$/g | 104 m$^2$/g | 116 m$^2$/g |
| SBET 6h. 600°C | - | 65 m$^2$/g | 73 m$^2$/g | 65 m$^2$/g | 50m$^2$/g | _ | 69m$^2$/g | |
| SBET 2h. 800°C | | | | - | | 50 m$^2$/g | | |
| SBET 6h. 800°C | 52 m$^2$/g | 52 m$^2$/g | 50 m$^2$/g | 50 m$^2$/g | | - | 33 m$^2$/g | 40 m$^2$/g |
| SBET 6h. 900°C | 35 m$^2$/g | 35 m$^2$/g | 34 m$^2$/g | 30 m$^2$/g | 22 m$^2$/g | 32 m$^2$/g | 18 m$^2$/g | 28 m$^2$/g |
| a 6h. 800°C | 5,39Å | 5,37Å | 5,38Å | | | | 5,37Å | 5,36Å |
| a 6h. 900°C | - | - | - | 5,38Å | 5,36Å | 5,39Å | | 5,36Å |
| SBET : Surface spécifique BET<br>a : paramètre de maille | | | | | | | | |

\* Ce rapport est exprimé en poids d'oxyde $CeO_2$/$ZrO_2$

Tableau 2

| Exemples | 9 | 10 |
|---|---|---|
| Rapport Ce/Zr* | 87/13 | 87/13 |
| SBET 6h. 400°C | 100m$^2$/g | 100m$^2$/g |
| SBET 2h. 800°C | 55m$^2$/g | 55m$^2$/g |
| SBET 6h. 900°C | 35m$^2$/g | 35m$^2$/g |
| a 6h. 900°C | 5,38Å | 5,39Å |
| a : paramètre de maille | | |

\* Ce rapport est exprimé en poids d'oxyde $CeO_2$/$ZrO_2$

**Revendications**

1. Procédé de préparation d'un précurseur d'une composition à base d'un oxyde mixte de cérium et de zirconium, caractérisé en ce qu'il comprend les étapes suivantes :

   - on prépare un mélange liquide comprenant des composés du cérium trivalent et du zirconium;
   - on met en contact le mélange précédent avec un carbonate ou un bicarbonate et on forme un milieu réactionnel présentant pendant la réaction un pH neutre ou basique;
   - on récupère un précipité comprenant un composé de carbonate de cérium.

2. Procédé selon la revendication 1, caractérisé en ce qu'on réalise la mise en contact précitée en introduisant le mélange liquide dans une solution basique.

3. Procédé selon la revendication 2 ou 3, caractérisé en ce qu'on utilise comme solution basique une solution d'ammoniaque.

4. Procédé selon l'une quelconque des revendications précédentes, caractérisé en ce qu'on utilise comme composés du cérium et du zirconium des sels solubles de ces éléments.

5. Procédé selon l'une quelconque des revendications 1 à 4, caractérisé en ce qu'on prépare un mélange liquide comprenant des composés du cérium et du zirconium qui est une suspension comprenant des hydroxydes de ces éléments.

6. Procédé selon l'une quelconque des revendications précédentes, caractérisé en ce qu'on maintient pendant la réaction un pH compris entre 8 et 11 et plus particulièrement entre 8 et 9.

7. Procédé de préparation d'une composition à base d'un oxyde mixte de cérium et de zirconium, caractérisé en ce qu'il comprend les étapes suivantes :

   - on prépare un mélange liquide comprenant des composés du cérium trivalent et du zirconium;
   - on met en contact le mélange précédent avec un carbonate ou un bicarbonate et on forme un milieu réactionnel présentant pendant la réaction un pH neutre ou basique;
   - on récupère un précipité comprenant un composé de carbonate de cérium;
   - on calcine le précipité.

8. Procédé selon la revendication 7, caractérisé en ce qu'on calcine le précipité sous air.

9. Procédé selon l'une quelconque des revendications précédentes, caractérisé en ce que le mélange liquide précité comprend en outre un composé d'un élément choisi dans le groupe comprenant les terres rares, l'aluminium, le silicium, le thorium, le magnésium, le scandium, le gallium, le fer, le bismuth, le nickel, l'étain, le chrome et le bore.

10. Précurseur de composition à base d'un oxyde mixte de cérium et de zirconium, caractérisé en ce qu'il comprend un mélange d'un composé carbonate de cérium et d'un oxyhydroxyde de zirconium.

11. Précurseur de composition à base d'un oxyde mixte de cérium et de zirconium, caractérisé en ce qu'il comprend un mélange d'un composé carbonate de cérium et d'un oxyhydroxyde de zirconium et en ce qu'il présente une teneur en oxydes alcalins ou alcalino-terreux d'au plus 100ppm.

12. Précurseur selon la revendication 10 ou 11, caractérisé en ce que le rapport atomique Zr/Ce est d'au plus 1,5, plus particulièrement d'au plus 0,4.

13. Composition à base d'un oxyde mixte de cérium et de zirconium, caractérisée en ce qu'elle présente un volume poreux total d'au moins 0,6cm$^3$/g.

14. Composition à base d'un oxyde mixte de cérium et de zirconium, caractérisée en ce qu'elle présente un volume poreux total d'au moins 0,6cm$^3$/g et en ce qu'au moins 40%, plus particulièrement au moins 50%, du volume poreux total est apporté par des pores de diamètre d'au plus 1$\mu$m.

15. Composition selon la revendication 14, caractérisée en ce qu'au moins 40%, plus particulièrement au moins 50%, du volume poreux total est apporté par des pores de diamètre compris entre 10 et 100nm.

16. Composition selon l'une des revendications 13 à 15, caractérisée en ce qu'elle présente un volume poreux total d'au moins 0,7cm$^3$/g.

17. Composition à base d'un oxyde mixte de cérium et de zirconium, caractérisée en ce qu'elle présente un volume poreux total d'au moins 0,3 cm$^3$/g, ce volume étant apporté par des pores dont le diamètre est d'au plus 0,5$\mu$m.

18. Composition selon l'une des revendications 13 à 17, caractérisée en ce qu'elle a été calcinée à une température comprise entre 200 et 800°C.

19. Composition selon la revendication 18, caractérisée en ce qu'elle a été calcinée 6 heures.

20. Composition selon l'une des revendications 13 à 19, caractérisée en ce qu'elle présente après calcination 6 heures à 800°C une surface spécifique d'au moins 20m$^2$/g.

21. Composition selon l'une des revendications 13 à 19, caractérisée en ce qu'elle présente après calcination 6 heures à 800°C une surface spécifique d'au moins 40m$^2$/g.

22. Composition selon l'une des revendications 13 à 21, caractérisée en ce qu'elle présente après calcination 6 heures à 900°C une surface spécifique d'au moins 20m$^2$/g.

23. Composition selon l'une des revendications 13 à 22, caractérisée en ce qu'elle répond a la formule générale Ce$_x$ Zr$_{1-x}$ O$_2$ dans laquelle x peut être compris entre 0,4 et 1, la valeur 1 étant exclue.

24. Composition selon la revendication 23, caractérisée en ce que x est compris entre 0,7 et 1 et plus particulièrement entre 0,8 et 1, la valeur 1 étant exclue.

25. Composition selon l'une des revendications 13 à 24, caractérisée en ce qu'elle présente une structure cristallisée dans un système à phase cubique de type CeO$_2$.

26. Utilisation d'une composition selon l'une des revendications 13 à 25 pour la fabrication de catalyseurs ou de supports de catalyseurs notamment pour le traitement des gaz d'échappement des moteurs à combustion interne.

27. Catalyseur comprenant une structure formant support revêtue par une couche poreuse sur laquelle sont déposés des éléments catalytiquement actifs, caractérisé en ce que ladite couche poreuse comprend une composition selon l'une des revendications 13 à 26.

## Claims

1. Process for the preparation of a precursor of a composition based on a mixed oxide of cerium and of zirconium, characterized in that it comprises the following stages:

   - a liquid mixture comprising compounds of trivalent cerium and of zirconium is prepared;
   - the above mixture is brought into contact with a carbonate or a bicarbonate and a reaction mixture is formed which exhibits a neutral or basic pH during the reaction;
   - a precipitate comprising a cerium carbonate compound is recovered.

2. Process according to claim 1, characterized in that the abovementioned operation of bringing into contact is carried out by introducing the liquid mixture into a basic solution.

3. Process according to claim 1 or 2, characterized in that an aqueous ammonia solution is used as basic solution.

4. Process according to any one of the preceding claims, characterized in that soluble cerium and zirconium salts are used as compounds of these elements.

5. Process according to any one of claims 1 to 4, characterized in that a liquid mixture comprising compounds of cerium and of zirconium is prepared which is a suspension comprising hydroxides of these elements.

6. Process according to any one of the preceding claims, characterized in that a pH of between 8 and 11 and more particularly between 8 and 9 is maintained during the reaction.

7. Process for the preparation of a composition based on a mixed oxide of cerium and of zirconium, characterized in that it comprises the following stages:

   - a liquid mixture comprising compounds of trivalent cerium and of zirconium is prepared;
   - the above mixture is brought into contact with a carbonate or a bicarbonate and a reaction mixture is formed which exhibits a neutral or basic pH during the reaction;
   - a precipitate comprising a cerium carbonate compound is recovered;
   - the precipitate is calcined.

8. Process according to claim 7, characterized in that the precipitate is calcined under air.

9. Process according to any one of the preceding claims, characterized in that the abovementioned liquid mixture additionally comprises a compound of an element chosen from the group comprising rare-earth metals, aluminium, silicon, thorium, magnesium, scandium, gallium, iron, bismuth, nickel, tin, chromium and boron.

**10.** Composition precursor based on a mixed oxide of cerium and of zirconium, characterized in that it comprises a mixture of a cerium carbonate compound and of a zirconium hydroxide oxide.

**11.** Composition precursor based on a mixed oxide of cerium and of zirconium, characterized in that it comprises a mixture of a cerium carbonate compound and of a zirconium hydroxide oxide and in that it exhibits a content of alkali metal or alkaline-earth metal oxides of at most 100 ppm.

**12.** Precursor according to claim 10 or 11, characterized in that the Zr/Ce atomic ratio is at most 1.5 and more particularly at most 0.4.

**13.** Composition based on a mixed oxide of cerium and of zirconium, characterized in that it exhibits a total pore volume of at least 0.6 $cm^3$/g.

**14.** Composition based on a mixed oxide of cerium and of zirconium, characterized in that it exhibits a total pore volume of at least 0.6 $cm^3$/g and in that at least 40%, more particularly at least 50%, of the total pore volume is contributed by pores with a diameter of at most 1 $\mu$m.

**15.** Composition according to claim 14, characterized in that at least 40%, more particularly at least 50%, of the total pore volume is contributed by pores with a diameter of between 10 and 100 nm.

**16.** Composition according to one of claims 13 to 15, characterized in that it exhibits a total pore volume of at least 0.7 $cm^3$/g.

**17.** Composition based on a mixed oxide of cerium and of zirconium, characterized in that it exhibits a total pore volume of at least 0.3 $cm^3$/g, this volume being contributed by pores which have a diameter of at most 0.5 $\mu$m.

**18.** Composition according to one of claims 13 to 17, characterized in that it has been calcined at a temperature of between 200 and 800°C.

**19.** Composition according to claim 18, characterized in that it has been calcined for 6 hours.

**20.** Composition according to one of claims 13 to 19, characterized in that it exhibits, after calcination for 6 hours at 800°C, a specific surface of at least 20 $m^2$/g.

**21.** Composition according to one of claims 13 to 19, characterized in that it exhibits, after calcination for 6 hours at 800°C, a specific surface of at least 40 $m^2$/g.

**22.** Composition according to one of claims 13 to 21, characterized in that it exhibits, after calcination for 6 hours at 900°C, a specific surface of at least 20 $m^2$/g.

**23.** Composition according to one of claims 13 to 22, characterized in that it corresponds to the general formula $Ce_xZr_{1-x}O_2$ in which x can be between 0.4 and 1, the value 1 being excluded.

**24.** Composition according to claim 23, characterized in that x in between 0.7 and 1 and more particularly between 0.8 and 1, the value 1 being excluded.

**25.** Composition according to one of claims 13 to 24, characterized in that it exhibits a structure crystallized in a cubic phase system of $CeO_2$ type.

**26.** Use of a composition according to one of claims 13 to 25 in the manufacture of catalysts or of catalyst supports, in particular for the treatment of exhaust gases from internal combustion engines.

**27.** Catalyst comprising a support-forming structure coated with a porous layer on which are deposited catalytically active elements, characterized in that the said porous layer comprises a composition according to one of claims 13 to 26.

**Patentansprüche**

1. Verfahren zur Herstellung eines Vorläufers einer Zusammensetzung auf Basis eines Cer/Zirkonium-Mischoxids, dadurch gekennzeichnet, daß es die folgenden Verfahrensschritte umfaßt:

   - Man stellt eine flüssige Mischung her, die Verbindungen des dreiwertigen Cers und des Zirkoniums enthält;
   - man bringt diese Mischung mit einem Carbonat oder Bicarbonat in Kontakt und stellt so ein Reaktionsmilieu her, das während der Reaktion einen neutralen oder basischen pH-Wert aufweist;
   - man erhält einen Niederschlag, der eine Cercarbonatverbindung enthält.

2. Verfahren nach Anspruch 1, dadurch gekennzeichnet, daß das Inkontaktbringen dadurch erfolgt, daß man die flüssige Mischung in eine basische Lösung einträgt.

3. Verfahren nach Anspruch 2 oder 3, dadurch gekennzeichnet, daß man als basische Lösung eine Ammoniaklösung verwendet.

4. Verfahren nach einem der vorhergehenden Ansprüche, dadurch gekennzeichnet, daß man als Verbindungen des Cers und des Zirkoniums lösliche Salze dieser Elemente verwendet.

5. Verfahren nach einem der Ansprüche 1 bis 4, dadurch gekennzeichnet, daß man eine flüssige Mischung herstellt, die Verbindungen des Cers und des Zirkoniums enthält und die eine Suspension mit Hydroxiden dieser Elemente darstellt.

6. Verfahren nach einem der vorhergehenden Ansprüche, dadurch gekennzeichnet, daß man während der Reaktion einen pH-Wert zwischen 8 und 11, insbesondere zwischen 8 und 9, beibehält.

7. Verfahren zur Herstellung einer Zusammensetzung auf Basis eines Cer/Zirkonium-Mischoxids, dadurch gekennzeichnet, daß es die folgenden Verfahrensschritte umfaßt:

   - Man stellt eine flüssige Mischung her, die Verbindungen des dreiwertigen Cers und des Zirkoniums enthält;
   - man bringt diese Mischung mit einem Carbonat oder Bicarbonat in Kontakt und stellt so ein Reaktionsmilieu her, das während der Reaktion einen neutralen oder basischen pH-Wert aufweist;
   - man erhält einen Niederschlag, der eine Cercarbonatverbindung enthält;
   - man calciniert den Niederschlag.

8. Verfahren nach Anspruch 7, dadurch gekennzeichnet, daß man den Niederschlag unter Luft calciniert.

9. Verfahren nach einem der vorhergehenden Ansprüche, dadurch gekennzeichnet, daß die flüssige Mischung außerdem eine Verbindung eines Elementes enthält, das ausgewählt ist aus der Gruppe der Seltenen Erden, Aluminium, Silicium, Thorium, Magnesium, Scandium, Gallium, Eisen, Wismuth, Nickel, Zinn, Chrom und Bor.

10. Vorläufer einer Zusammensetzung auf Basis eines Cer/Zirkonium-Mischoxids, dadurch gekennzeichnet, daß er eine Mischung aus einer Cercarbonatverbindung und einem Zirkoniumoxyhydroxid umfaßt.

11. Vorläufer einer Zusammensetzung auf Basis eines Cer/Zirkonium-Mischoxids, dadurch gekennzeichnet, daß er eine Mischung aus einer Cercarbonatverbindung und einem Zirkoniumoxyhydroxid umfaßt und er einen Gehalt an Alkali- oder Erdalkalimetalloxiden von höchstens 100 ppm aufweist.

12. Vorläufer nach Anspruch 10 oder 11, dadurch gekennzeichnet, daß das Zr/Ce-Atomverhältnis höchstens 1,5, insbesondere höchstens 0,4, beträgt.

13. Zusammensetzung auf Basis eines Cer/Zirkonium-Mischoxids, dadurch gekennzeichnet, daß sie ein Gesamtporenvolumen von mindestens 0,6 $cm^3$/g aufweist.

14. Zusammensetzung auf Basis eines Cer/Zirkonium-Mischoxids, dadurch gekennzeichnet, daß sie ein Gesamtporenvolumen von mindestens 0,6 $cm^3$/g aufweist und mindestens 40 % des Gesamtporenvolumens, insbesondere mindestens 50 % des Gesamtporenvolumens, durch Poren mit einem Durchmesser von höchstens 1 μm gebildet wird.

15. Zusammensetzung nach Anspruch 14, dadurch gekennzeichnet, daß mindestens 40 % des Gesamtporenvolumens, insbesondere mindestens 50 % des Gesamtporenvolumens, durch Poren mit einem Durchmesser zwischen 10 und 100 nm gebildet wird.

16. Zusammensetzung nach einem der Ansprüche 13 bis 15, dadurch gekennzeichnet, daß sie ein Gesamtporenvolumen von mindestens 0,7 $cm^3$/g aufweist.

17. Zusammensetzung auf Basis eines Cer/Zirkonium-Mischoxids, dadurch gekennzeichnet, daß sie ein Gesamtporenvolumen von mindestens 0,3 $cm^3$/g aufweist, wobei dieses Volumen durch Poren mit einem Durchmesser von höchstens 0,5 $\mu$m gebildet wird.

18. Zusammensetzung nach einem der Ansprüche 13 bis 17, dadurch gekennzeichnet, daß sie bei einer Temperatur zwischen 200 °C und 800 °C calciniert worden ist.

19. Zusammensetzung nach Anspruch 18, dadurch gekennzeichnet, daß sie 6 Stunden lang calciniert worden ist.

20. Zusammensetzung nach einem der Ansprüche 13 bis 19, dadurch gekennzeichnet, daß sie nach sechsstündiger Calcinierung bei 800 °C eine spezifische Oberfläche von mindestens 20 $m^2$/g aufweist.

21. Zusammensetzung nach einem der Ansprüche 13 bis 19, dadurch gekennzeichnet, daß sie nach sechsstündiger Calcinierung bei 800 °C eine spezifische Oberfläche von mindestens 40 $m^2$/g aufweist.

22. Zusammensetzung nach einem der Ansprüche 13 bis 21, dadurch gekennzeichnet, daß sie nach sechsstündiger Calcinierung bei 900 °C eine spezifische Oberfläche von mindestens 20 $m^2$/g aufweist.

23. Zusammensetzung nach einem der Ansprüche 13 bis 22, dadurch gekennzeichnet, daß sie der allgemeinen Formel $Ce_xZr_{1-x}O_2$ entspricht, in der x zwischen 0,4 und 1 liegen kann, wobei der Wert von 1 ausgenommen ist.

24. Zusammensetzung nach Anspruch 23, dadurch gekennzeichnet, daß x zwischen 0,7 und 1, insbesondere zwischen 0,7 und 1, liegt, wobei der Wert von 1 ausgenommen ist.

25. Zusammensetzung nach einem der Ansprüche 13 bis 24, dadurch gekennzeichnet, daß sie eine Kristallstruktur mit kubischer Phase vom $CeO_2$-Typ aufweist.

26. Verwendung einer Zusammensetzung nach einem der Ansprüche 13 bis 25 zur Herstellung von Katalysatoren oder Trägern für Katalysatoren insbesondere zur Behandlung von Abgasen aus Verbrennungsmotoren.

27. Katalysator mit einer Struktur aus einem Träger, der mit einer porösen Schicht beschichtet ist, auf der katalytisch aktive Elemente aufgebracht sind, dadurch gekennzeichnet, daß die poröse Schicht eine Zusammensetzung nach einem der Ansprüche 13 bis 26 umfaßt.

Fig. 1

Fig. 2

Fig. 3

Fig. 4

EP 0 735 984 B1